Europäisches Patentamt

(19) European Patent Office (11) Numéro de publication : **0 129 462**
**B1**
Office européen des brevets

(12) **FASCICULE DE BREVET EUROPÉEN**

(45) Date de publication du fascicule du brevet : 30.12.86

(51) Int. Cl.⁴ : **B 23 K 26/00**

(21) Numéro de dépôt : **84401151.0**

(22) Date de dépôt : **06.06.84**

(54) **Procédé et dispositif de perçage par laser.**

(30) Priorité : **15.06.83 FR 8309858**

(43) Date de publication de la demande :
**27.12.84 Bulletin 84/52**

(45) Mention de la délivrance du brevet :
**30.12.86 Bulletin 86/52**

(84) Etats contractants désignés :
**DE FR GB**

(56) Documents cités :
**EP-A- 0 013 657**
**EP-A- 0 064 352**
**EP-A- 0 066 502**
**GB-A- 2 103 834**
**PATENTS ABSTRACTS OF JAPAN, vol. 6, no. 253 (M-178)[1131], 11 décembre 1982, page 134 M 178; & JP - A - 57 149 087 (NIPPON DENKI K.K.) 14-09-1982**
**IDEM**
**PATENTS ABSTRACTS OF JAPAN, vol. 7, no. 85 (M-206)[1230], 9 avril 1983, page 19 M 206; & JP - A - 58 9783 (KOGYO GIJUTSUIN) 20-01-1983**

(73) Titulaire : **SOCIETE NATIONALE D'ETUDE ET DE CONSTRUCTION DE MOTEURS D'AVIATION, "S.N.E.C.M.A."**
**2 Boulevard Victor**
**F-75015 Paris (FR)**

(72) Inventeur : **Bizot, Henri**
**102, boulevard des Batignolles**
**F-75017 Paris (FR)**
Inventeur : **Brasselet, Géry-Charles Joseph**
**175, rue Jacques-Louis David**
**F-77350 Le Mee sur Seine (FR)**
Inventeur : **Louis, Jean-Paul**
**93, rue Pierre Curie**
**F-77550 Moissy Cramayel (FR)**
Inventeur : **Narcy, Georges**
**25, square de Beauregard**
**F-77000 Melun (FR)**

(74) Mandataire : **Moinat, François**
**S.N.E.C.M.A. Service des Brevets Boîte Postale 81**
**F-91003 Evry Cedex (FR)**

## Description

La présente invention concerne un procédé de perçage d'éléments relativement minces, par exemple des tôles métalliques, ou des plaques stratifiées, par un laser notamment fonctionnant par impulsions. Elle concerne également un dispositif de mise en œuvre dudit procédé.

Des procédés connus pour percer des plaques plus ou moins minces en tôle ou en stratifié utilisent des impulsions de haute énergie, par exemple des impulsions d'un faisceau laser. C'est ainsi que la demande de brevet FR-A-2 511 523 décrit un procédé de vérification et de réglage de la position dans la surface d'un élément d'une série de trous, produits par un faisceau d'énergie, notamment par laser ; mais, en fait, ce brevet ne décrit que le moyen de positionner correctement, d'après une configuration préétablie, chacun des trous. Cette vérification et ce réglage qui ne concernent que la position du trou ne permettent pas de s'assurer que dans l'épaisseur même de l'élément percé, ou du côté opposé au générateur d'impulsion laser, le trou ait bien la géométrie désirée.

Le brevet EP-A-0 013 657 décrit un procédé de perçage dans lequel la radiation d'un faisceau traversant le trou percé est détectée et utilisée pour l'asservissement des paramètres du faisceau de perçage qui est par exemple de type laser. Ce procédé s'applique au cas où le faisceau de détection est différent du faisceau de perçage ou au cas où la pièce usinée est doublée du côté opposé à l'impact du faisceau par une pièce d'appui. La mise en œuvre de la détection directe de la radiation émise par le générateur de perçage et de l'asservissement associé est très délicate et ne convient pas à certaines applications. L'utilisation d'une seconde source de radiation ou d'une pièce d'appui entraînent une complexité désavantageuse du procédé ou de sa mise en œuvre.

Or, on sait que pour une « impulsion » déterminée d'un faisceau étroit et de haute énergie telle qu'elle est délivrée par un générateur laser, on peut percer une épaisseur déterminée mais en général assez faible du matériau, épaisseur qui dépend, bien entendu, de la nature de ce matériau et du diamètre du trou à percer. Pour des épaisseurs plus grandes de ce matériau, et/ou des diamètres plus grands des trous, on peut évidemment augmenter l'énergie de l'impulsion (soit en augmentant l'énergie instantanée, sans modifier sa durée, soit la durée, sans modifier l'énergie instantanée, soit en augmentant à la fois les deux) et faire varier la distance focale du faisceau laser. Mais pour divers motifs bien connus de l'homme de métier, les trous ainsi percés présentent des irrégularités dès que l'épaisseur à percer dépasse un certain seuil, sauf si les diamètres sont très petits (par exemple de l'ordre de 0,1 mm ou endessous). Le trou a alors une forme de « cratère » plus ou moins irrégulier qui le rend impropre à l'usage envisagé (qui peut être par exemple la réalisation d'éléments à multiples perforations pour refroidissement par sudation, ou pour des revêtements acoustiques ou antivibratoires, etc...). C'est la raison pour laquelle il est généralement préférable pour des éléments relativement épais et/ou pour des trous de diamètres relativement grands (par exemple d'épaisseur de l'ordre de 0,8 mm et des diamètres de plusieurs dixièmes) de procéder non pas par une seule impulsion plus énergétique, ou de durée plus longue, mais par une succession d'impulsions. Toutefois, il est évident qu'il faut contrôler directement ou indirectement cette succession d'impulsions, toute dérive d'une des caractéristiques de cette succession d'impulsions pouvant se répercuter sur la qualité du trou.

La Demanderesse a par exemple constaté que certaines dérives provoquant la diminution (ou le changement de répartition) des énergies de la succession d'impulsions à l'endroit où un trou doit être percé peuvent provoquer un trou « borgne » ou en tout cas débouchant mal. Il en est de même si l'épaisseur de l'élément varie dans le sens d'une augmentation, ce qui arrive d'une façon fréquente pour les matériaux « stratifiés ».

Il est nécessaire de bien comprendre le mécanisme du perçage lorsqu'il est effectué par une succession d'impulsions d'un faisceau laser.

Pour des épaisseurs minimes et des diamètres de trous suffisamment petits, la concentration d'énergie à la surface de l'élément à percer liquéfie et porte à l'ébullition (ou sublime) localement l'élément.

De ce fait :

d'une part l'élément est percé localement et le brevet EP-A-0 013 657 déjà cité prévoit à ce stade la détection d'une radiation,

d'autre part il y a un éclair lumineux qui est utilisé, comme indiqué plus haut dans la demande de brevet FR-A-2 511 523 pour vérifier et le cas échéant corriger la position du trou par rapport à une configuration préétablie,

enfin, et c'est la propriété qui est utilisée dans la présente invention, l'expulsion de vapeur et de scories par la concentration très locale d'énergie sur l'élément à percer produit un bruit caractéristique. Ce bruit varie entre autres selon le volume de matière éjecté, et en conséquence selon que l'impulsion considérée entraîne un trou borgne, un trou légèrement débouchant ou un trou déjà calibré.

On pourrait, certes contrôler l'existence et/ou la qualité des trous « à l'oreille », voire même corriger les réglages par des décisions de spécialistes « écoutant » les bruits émis, mais ce contrôle serait subjectif, donc sujet à caution, d'une part, et d'autre part ne permettrait pas son enregistrement ni la correction des défauts en temps réel ou à tout le moins en temps quasi réel.

Tout en évitant les inconvénients des procédés et dispositifs connus rappelés ci-dessus, un des objectifs de la présente invention est un objectif de contrôle consistant à vérifier, pour chaque trou d'un tel élément mince destiné à recevoir des perforations multiples, et percé par une succession d'impulsions laser, que le trou débouche effectivement et d'une façon acceptable (c'est-à-dire avec un « calibrage » correct) sur la face de l'élément à percer opposée au faisceau laser, cette surveillance étant effectuée trou par trou par un moyen automatique basé sur les signaux acoustiques émis par la plaque à percer à chaque impulsion laser reçue.

C'est aussi un objectif de la présente invention de se servir de cette surveillance permanente par voie acoustique pour déceler, le cas échéant, une dérive du signal acoustique, correspondant à un éventuel défaut final du trou en cours de perçage, et pour corriger les caractéristiques des impulsions laser (énergie instantanée, durée, distance focale, nombre ou cadence) afin d'obtenir des trous débouchant et débouchant bien (c'est-à-dire correctement calibrés, notamment sur la face de l'élément opposée au faisceau laser).

Cette correction peut se faire soit en arrêtant la machine et en effectuant la mise au point correspondante à la main, à la demande ou par tâtonnements, soit dans une solution préférée « en boucle fermée », c'est-à-dire en commandant les variations de paramètres de fonctionnement du laser nécessaires en temps à tout le moins quasi réel pour que le trou suivant soit bon, ou même, dans une version qui a donné des résultats encourageants, en temps réel pour le trou en cours de perçage.

En fait, l'invention est particulièrement intéressante si le perçage et son calibrage nécessitent au moins deux impulsions. L'invention s'applique cependant également dans le cas où perçage et calibrage sont réalisés en une seule impulsion.

Dans certains cas, la première impulsion sert déjà en fait à percer le trou, la deuxième à le calibrer. A l'oreille on distingue déjà fort bien le bruit émis par l'élément à percer lors de la première impulsion, qui est un bruit relativement fort, du bruit moins fort, qui correspond au calibrage par la deuxième impulsion du trou percé par la première impulsion. Cette réduction importante du bruit émis à la deuxième impulsion permet dans ce cas de contrôler le fait que le trou débouche bien.

Souvent, pour des épaisseurs et/ou diamètres plus grands de trous, il faut plusieurs impulsions (trois ou quatre par exemple) pour que le trou débouche, les impulsions suivantes (deux ou trois par exemple) servant à calibrer le trou et/ou à vérifier que le trou est à la fois percé et bien calibré. A l'oreille également, on reconnaît dans le crépitement dû à la succession d'impulsions laser, celle (par exemple la troisième) qui a produit un bruit moins fort, parce qu'elle a fait déboucher le trou, la quatrième en ce cas produisant un bruit encore moins fort parce qu'elle a calibré correctement un trou déjà percé mais imparfaitement.

Le procédé de perçage par laser du type qui vient d'être décrit est caractérisé selon la présente invention en ce qu'il comprend au moins les

étapes suivantes :

filtrage d'amplitude du signal par rapport à un seuil prédéterminé,

mise en forme logique du signal,

en parallèle, émission d'un second signal correspondant à chaque impulsion par le laser,

mise en forme logique du second signal,

mise en place des deux signaux,

d'une part, mise en mémoire des signaux correspondants aux impulsions nécessaires au perçage de chaque trou,

d'autre part, comparaison du signal obtenu à une valeur de consigne,

puis mise en forme du résultat de la comparaison,

le processus se complétant par l'étape complémentaire :

affichage et enregistrement du résultat constituant un moyen de contrôle du perçage et du calibrage corrects de chaque trou.

Avantageusement, une première étape supplémentaire est ajoutée comportant le filtrage de fréquence du signal.

Selon une application du procédé, la correction d'au-moins un paramètre de fonctionnement du laser (énergie instantanée du faisceau, durée, distance focale, nombre d'impulsions ou leur cadence) est effectuée par intervention manuelle d'un opérateur réagissant à l'affichage d'un résultat reconnu incorrect (trou non débouchant, perçage insuffisant ou défaut de calibrage).

Selon une autre application avantageuse du procédé, le processus est en outre complété par les étapes complémentaires suivantes :

transmission du résultat du contrôle à un calculateur d'asservissement du laser,

correction automatique d'au-moins un paramètre de fonctionnement du laser, de préférence la position du point de focalisation du faisceau laser afin de corriger une dérive éventuelle influant sur la qualité des trous percés et provenant soit du générateur laser, soit des tolérances affectant l'élément à percer.

De manière avantageuse, la caractéristique du signal acoustique analysée dans la chaîne de traitement est son intensité ou niveau sonore.

De manière avantageuse, en cas d'anomalie détectée par le contrôle, le procédé selon l'invention comporte une correction automatique consistant à provoquer une impulsion supplémentaire du faisceau laser par rapport aux impulsions programmées pour le perçage et calibrage du trou considéré avant déclenchement du passage au trou suivant permettant d'obtenir l'asservissement en temps réel du fonctionnement du laser. Le dispositif du perçage par laser pour la mise en œuvre du procédé selon l'invention est caractérisé en ce qu'il comporte :

un capteur acoustique placé à proximité de l'élément à percer et délivrant un signal acoustique ;

un filtre d'amplitude du niveau sonore du signal par rapport à un seuil préalablement déterminé ;

un premier convertisseur du type analogique numérique opérant la mise en forme logique du signal sous forme « 0 » et « 1 » ;

un second convertisseur du type analogique numérique traitant un signal reçu du laser et correspondant aux impulsions du faisceau laser ;

un registre effectuant une mise en phase des signaux reçus des premier et second convertisseurs ;

une mémoire où sont stockées les informations élaborées dans le registre ;

un comparateur comparant le signal reçu du registre à une valeur de consigne ;

un élément de consigne fournissant au comparateur une valeur de consigne représentant le nombre théorique d'impulsions nécessaires pour percer et calibrer un trou dans l'élément à percer.

un élément d'affichage et décomptage recevant le signal de sortie du comparateur.

De manière avantageuse, le dispositif comporte en outre un calculateur d'asservissement recevant le signal de sortie du comparateur et à partir duquel au moins un paramètre de fonctionnement du laser est asservi au résultat obtenu.

L'invention sera mieux comprise par la description qui va suivre d'un mode de réalisation de l'invention donné ci-dessous à titre d'exemple non limitatif, accompagnée des figures jointes dans lesquelles, bien entendu, la surveillance acoustique et le réglage des paramètres de fonctionnement du laser à partir de ladite surveillance ne sont pas faits, dans la présente invention, « à l'oreille » mais par un dispositif adéquat.

La figure 1 montre un exemple de signal acoustique émis par un élément à percer à l'impact du faisceau laser.

La figure 2 est un diagramme des impulsions laser et des signaux acoustiques émis par l'élément pour un premier trou (partie gauche de la figure), pour un deuxième trou (au milieu de la figure), pour un nième trou (partie droite de la figure), pour un perçage et calibrage par quatre impulsions.

La figure 3 représente un schéma fonctionnel de la chaîne de traitement des signaux acoustiques.

La figure 4 montre un dispositif d'application de l'invention au perçage d'un élément devant recevoir des perforations multiples très nombreuses.

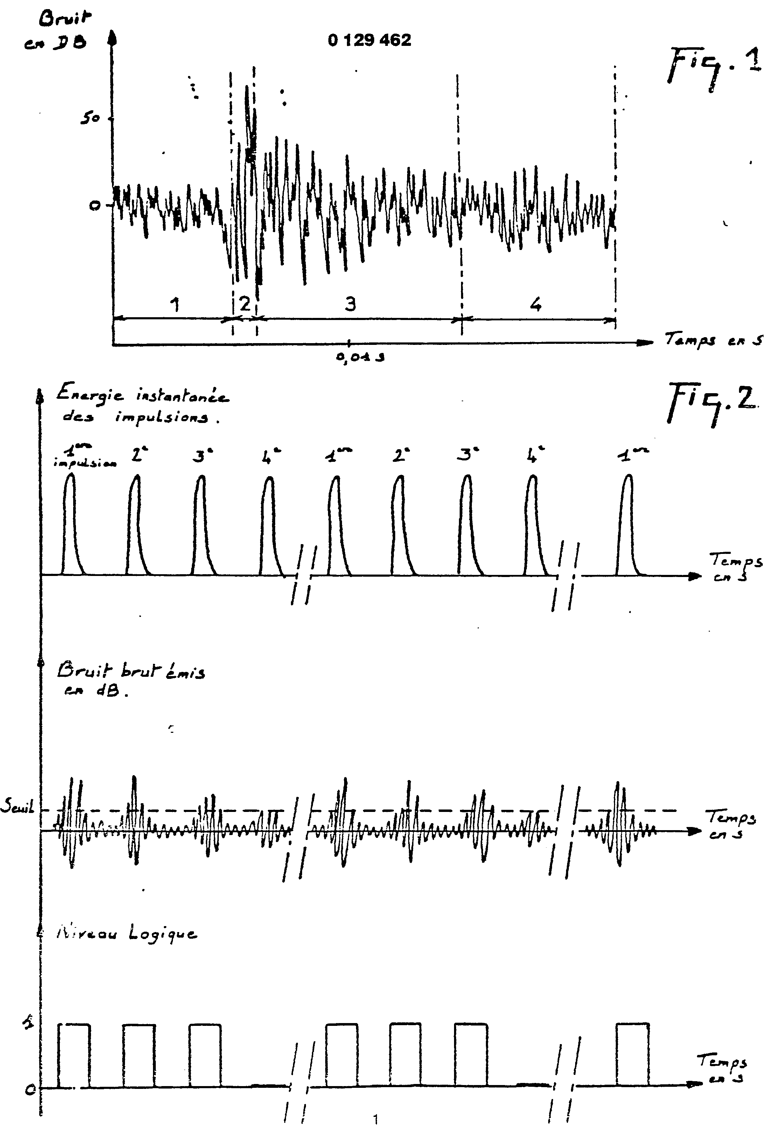

Sur la figure 1 on voit un diagramme représentant les variations en fonction du temps du son (bruit blanc sans filtrage d'intensité ou de fréquence) émis lors de l'impact du faisceau laser sur l'élément à percer : la partie désignée par 1, correspondant au bruit de fond avant impulsion laser, la partie désignée par 2 correspondant à l'impulsion laser proprement dite, la partie désignée par 3 correspondant au son consécutif à l'impulsion laser, la partie désignée par 4 correspondant au retour au bruit de fond.

Sur la figure 2, on peut voir trois diagrammes, en fonction du temps, correspondant d'une part, à une série d'impulsions, d'autre part, au son émis. Celui du haut représente les niveaux d'énergie en fonction du temps dans le cas où le perçage et le calibrage se font, pour chaque trou,

en quatre impulsions.

Le diagramme du milieu représente schématiquement le son brut émis dans des conditions analogues à celles de la figure 1 pour un perçage et un calibrage en quatre impulsions.

Comme il sera expliqué ci-dessous, pour le dispositif préféré, il existe un système à seuil destiné à traiter le signal acoustique brut. De ce fait, et après traitement du signal sonore, l'enregistrement figurant dans la partie inférieure de la figure 2 correspond au « niveau logique », relatif aux sons figurant sur le diagramme du milieu de la figure 2, comparé à un repère, donné par un signal de « consigne ».

On voit facilement :

que dans l'exemple représenté, toutes les impulsions sont exactement les mêmes : les niveaux énergétiques représentés ont une durée voisine de la milliseconde et une fréquence de quelques dizaines de hertz et sont absolument semblables,

que le signal émis par chaque impulsion de chaque série (c'est-à-dire pour chaque trou) est en valeur brute proche pour les deux premières impulsions, un peu plus faible pour la troisième et beaucoup plus faible pour la quatrième, et que le signal logique est exactement le même et égal à 1 pour les trois premières impulsions d'une série, et égal à zéro pour la dernière.

L'interprétation des diagrammes du milieu et du bas est la suivante : pour chaque série d'impulsions dans l'exemple représenté, les deux premières correspondent à des impulsions formant progressivement le trou, par ébauche puis approfondissement, la troisième faisant déboucher le trou mais avec un calibrage incomplet du côté opposé au laser et la quatrième impulsion correspondant d'une part au calibrage complet du trou et au contrôle du fait qu'il est effectivement bien percé et calibré.

Il faut remarquer à ce stade, qu'il peut y avoir des « anomalies » qui conduisent à un perçage incorrect du point de vue calibrage, ou, dans un cas extrême, à l'obtention d'un trou borgne. Ce pourrait être le cas notamment s'il y avait une dérive des caractéristiques des impulsions laser. Ce serait aussi le cas, par exemple si pour le perçage d'une tôle — et a fortiori d'un élément stratifié, dont l'épaisseur est souvent plus irrégulière — on passait d'une épaisseur moyenne — voire de l'épaisseur minimale — à l'épaisseur maximale correspondant aux tolérances habituelles. Rappelons à ce sujet que les tolérances d'épaisseur de tôles métalliques en acier ou en superalliages sont couramment de l'ordre de 10 %.

Dans le cas d'une telle « anomalie », et sans qu'il soit besoin de le décrire plus en détail, l'homme de métier comprendra facilement que les sons bruts émis et le niveau logique des sons encore davantage, ne seront plus tels que ceux représentés sur la figure 2. Notamment si le perçage n'a pas été obtenu, ou si le calibrage n'a pas la qualité requise, chaque quatrième impulsion dans le cas représenté figure 2 provoquera un son plus fort que dans le cas normal, et notamment dans le diagramme du bas de la figure 2, le quatrième niveau logique correspondant à la quatrième impulsion sera du même niveau (à savoir 1) que pour les trois précédentes impulsions au lieu d'être nul.

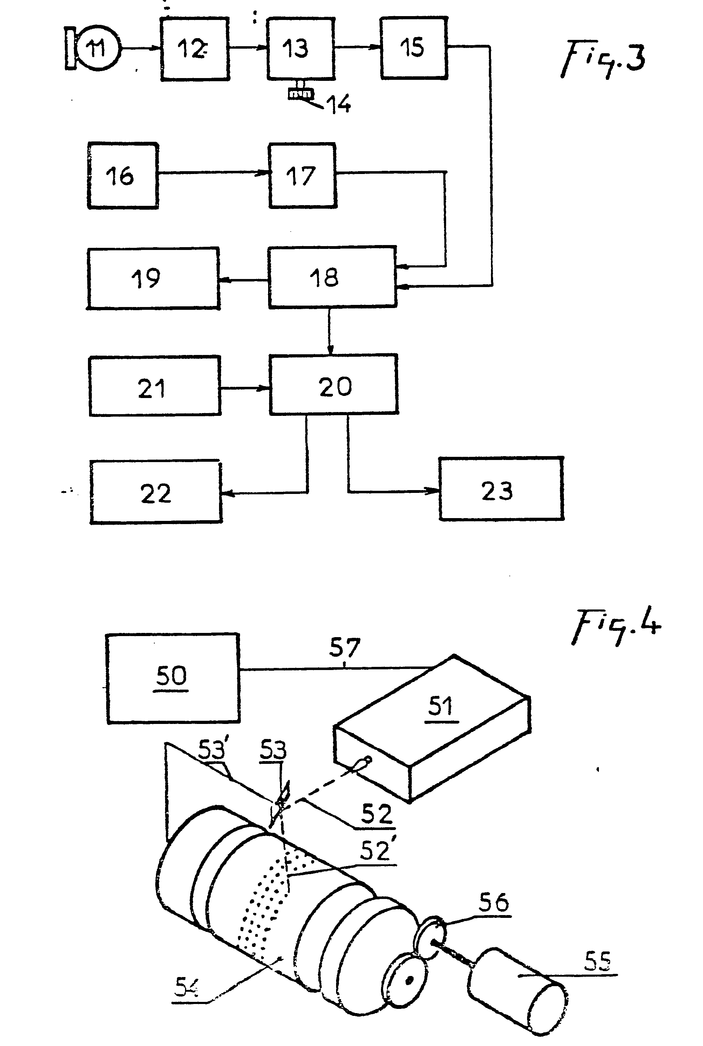

La figure 3 représente le schéma fonctionnel de la chaîne de traitement des signaux transmis par le microphone. Sur ce diagramme le repère 11 représente le microphone dont le signal est dans l'exemple représenté, envoyé d'abord à un filtre de fréquence 12, destiné à éliminer (ou en tous cas à réduire considérablement) l'afluence du bruit de fond de l'atelier. En fait l'expérience montre que le bruit émis par l'élément à percer à chaque impulsion reçue est principalement limité dans tous les cas dans une bande de fréquence qui, par exemple pour un superalliage, et pour une épaisseur de deux mm, est de l'ordre de 2 000 à 3 000 hertz. Un filtre de fréquence ne laissant passer que les sons entre ces deux limites supprimera tous les bruits d'atelier à l'extérieur de ces limites et apportera donc une précision accrue au dispositif. Il est à remarquer toutefois que la nécessité de ce filtre en fréquences ne s'impose que lorsque le dispositif est utilisé dans des conditions d'ambiance où les niveaux sonores sont élevés. Le signal acoustique ainsi traité passe dans un filtre 13 d'amplitude ou de niveau sonore qui reçoit parallèlement une valeur de seuil réglée par le dispositif 14 ; ce seuil définit le niveau sonore en dessous duquel un trou est dit correctement percé et calibré. Le signal en sortie du filtre 13 correspond alors à une succession de bruits correspondant aux impulsions de perçage ou de calibrage et de zones dites « muettes » représentant des trous percés et calibrés. En se reportant à la figure 2, dans le cas du perçage par quatre impulsions on voit que le réglage du filtre 13 est fait juste au-dessus du niveau sonore correspondant à la quatrième et dernière impulsion. Ce signal sortant du filtre 13 passe ensuite dans un convertisseur analogique numérique 15.

Parallèlement, un élément 16 d'un type connu détecte les impulsions du laser et les envoie dans un autre convertisseur analogique-numérique 17. Après traitement, le signal correspondant est envoyé, ainsi que celui du convertisseur 15, dans un registre 18 dans lequel s'effectue une mise en phase des signaux émanant des convertisseurs 15 et 17.

De ce registre 18, les informations sont envoyées pour stockage temporaire (le temps que le trou soit effectivement percé et calibré) dans une mémoire 19.

La même information est envoyée dans un comparateur 20 qui reçoit par ailleurs à partir d'un élément 21 une valeur de consigne représentant le nombre théorique d'impulsions nécessaire pour percer et calibrer un trou. Ce comparateur 20 examine le niveau logique du son émis lors de l'impact de la dernière impulsion programmée pour une perforation complète et calibrée. Si ce niveau est nul, c'est-à-dire si le bruit brut émis est inférieur au seuil pour la dernière impulsion seuil connu notamment grâce à l'élément de consigne 21, cela signifie que le trou est correctement percé. Si, au contraire, ce niveau logique est égal à 1, cela signifie que le trou est soit borgne, soit imparfaitement calibré.

Dans une forme simplifiée de l'invention, le constat, par affichage et comptage dans un élément 22, d'une qualité défectueuse du trou, conduit l'opérateur à intervenir manuellement notamment en arrêtant la machine et en réglant les paramètres de fonctionnement du laser, comme il sera expliqué plus loin.

Dans une forme préférée, ce réglage des caractéristiques du laser se fait, à partir de la sortie du comparateur 20, d'une façon automatique par un asservissement 23 d'au-moins un des paramètres laser, le fonctionnement de cet asservissement étant également expliqué plus loin.

Il est en effet possible d'effectuer un réglage manuel, imposant l'arrêt de la machine. Plusieurs variantes sont possibles pour modifier alors les paramètres de fonctionnement du laser et les modifications des paramètres ci-après sont notamment possibles :
l'énergie instantanée de l'impulsion,
la durée de l'impulsion,
la position du point de focalisation du faisceau laser,
ou encore le nombre d'impulsions par exemple en en ajoutant une supplémentaire.
cadence des impulsions.

On peut aussi bien entendu agir à la fois sur plusieurs de ces paramètres de fonctionnement jusqu'à obtention, au besoin par tâtonnements, de trous débouchant convenablement et correctement calibrés.

Dans une solution préférée de règlage automatique, toute anomalie pour un trou sera d'une part affichée et comptée, dans un système 22 analogue à celui représenté en figure 3. D'autre part, le signal acoustique sortant du comparateur sera utilisé pour asservissement en temps quasi réel pour tenir compte pour le trou suivant d'une éventuelle anomalie détectée pour le trou en cours de perçage. On conçoit aisément par exemple qu'on ne passe pas instantanément d'une épaisseur de tôle à la limite inférieure des tolérances à une épaisseur à la limite supérieure, ou que la dérive éventuelle des paramètres de fonctionnement du faisceau laser ne se produit qu'exceptionnellement d'une façon instantanée, ce qui permet d'accepter que les réglages correctifs soient en temps quasi réels et ne soient donc pleinement efficaces que pour le trou suivant, et non impérativement pour le trou en cours.

Pour réaliser cet asservissement automatique en temps quasi réel des paramètres de fonctionnement du laser, on peut aussi choisir d'agir sur un de ces paramètres et notamment :
l'énergie de l'impulsion,
la durée de l'impulsion,
la position du point de focalisation,
le nombre d'impulsions,
ou enfin, la cadence des impulsions.
La solution la plus avantageuse est généralement de jouer sur la position du point de focalisation du faisceau.

Dans cet asservissement en temps quasi réel, il faut bien comprendre que c'est notamment le signal acoustique de la dernière impulsion programmée qui est pris en considération pour corriger par exemple dans la solution préférée, la position du point de focalisation du faisceau laser pour le trou suivant. C'est ce qui a conduit ci-dessus à décrire le fonctionnement avec asservissement sous les termes « en temps quasi réel » puisqu'en fait il est pratiquement impossible dans ce cas de se servir notamment de l'information concernant le dernier trou programmé pour modifier les caractéristiques de cette impulsion ou des impulsions précédentes, caractéristiques qui ont progressivement déterminé la qualité du perçage et du calibrage de ce trou. Ce système ne permet en fait pratiquement que la correction du ou des paramètres de perçage pour le trou suivant, ce qui d'ailleurs, compte-tenu de la lenteur habituelle des variations de ce qui a été désigné par « anomalies », est la plupart du temps largement suffisant pour obtenir un élément à multiperforations de qualité acceptable.

On peut cependant, dans une version encore plus élaborée, asservir en temps réel (et non plus en temps quasi réel) les paramètres du dispositif de perçage et de calibrage. Il faut alors intervenir au niveau non plus du comparateur 20, mais du filtre de niveau sonore 13, pour chaque impulsion, en comparant son niveau à un niveau repère pour la première, deuxième, etc... n — 1 et nième impulsion, et ce sera en ce cas la dérive par rapport à ce niveau repère du son émis par chaque impulsion, qui permettra soit de jouer sur au-moins un des paramètres suivants de fonctionnement du faisceau laser : énergie instantanée, durée, position du point de focalisation ou cadence soit, dans une variante qui paraît particulièrement avantageuse, sur le nombre d'impulsions, par exemple en en employant une supplémentaire.

Dans ce dernier cas, le cadencement des impulsions du laser comporte les réserves nécessaires pour pouvoir effectivement provoquer une impulsion supplémentaire au même endroit pour un référentiel lié à l'élément à perforer. Dans ce qui précède, on a en général décrit un mode de réalisation de l'invention pour un nombre limité de trous. Dans certains cas, le nombre de trous à percer est considérable suivant des rangées successives, et il est nécessaire, sous l'aspect économique, d'employer un système de déplacement automatique de l'élément à percer, synchronisé avec les impulsions du laser.

Un tel système de déplacement automatique et de synchronisation pour perçage par laser de multiples trous percés et calibrés chacun par plusieurs impulsions est représenté sur la figure 4. Ce système est associé au dispositif conforme à l'invention dont le schéma fonctionnel est représenté à la figure 3 et qui n'est pas représenté sur la figure 4.

On y voit une armoire 50 de commande d'un laser 51. Ce laser 51 peut être du type pulsé ou du type à faisceau continu et dans ce dernier cas le faisceau est découpé en impulsions grâce à un moyen bien connu de l'homme du métier, par exemple par un obturateur. Dans ce laser (51) un dispositif non représenté focalise les impulsions sur la surface de la pièce à percer, la distance focale étant réglable par des moyens connus, et les rayons 52 étant renvoyés selon 52' par au moins un miroir 53 sur la pièce à percer. Le miroir 53 est synchronisé, d'une façon connue, par une liaison 53', avec le déplacement de l'élément qui doit recevoir des perforations multiples ; dans l'exemple représenté, il s'agit d'un élément 54 de révolution d'une chambre de combustion, ledit élément étant porté à chaque extrémité par un outillage muni de paliers non représentés, et étant entraîné en rotation par un moteur 55 par exemple électrique un dispositif réducteur, par exemple à engrenages 56, transmettant le mouvement à la pièce à percer. Préférentiellement, la synchronisation non représentée du miroir 53, avec le mouvement de la pièce devant recevoir des perforations multiples et avec les impulsions du laser sera réalisée de la façon suivante :

Pour l'avant-dernière impulsion qui sert généralement au calibrage, ou pour la dernière (qui sert de contrôle), le miroir sera orienté pour que l'axe du faisceau 52, en aval du dernier miroir, soit perpendiculaire à l'élément à percer. Pour chaque impulsion précédente (le cas échéant pour l'impulsion suivante), la synchronisation du miroir 53 et de l'élément 54 sera effectuée pour que l'impact des impulsions soit au même point que celui de l'avant-dernière impulsion (respectivement la dernière) sur l'élément, dans un référentiel lié à l'élément. On peut illustrer ce système de synchronisation en disant que par rapport à l'impulsion laser perpendiculaire à l'élément, une « avance de phase » est provoquée par la rotation synchronisée du miroir, avance dont la valeur dépend de la cadence des impulsions, de la vitesse de déplacement de l'élément à percer et du numéro d'ordre de l'impulsion sur l'élément à percer (respectivement un « retard de phase », s'il y a une, voire plusieurs, impulsions après celle qui se produit avec un faisceau dont l'axe est perpendiculaire à la surface à percer). Bien entendu, le miroir tourne depuis la position convenable pour la première impulsion d'une série correspondant à un trou, et se retrouve à sa position initiale pour le trou suivant.

Ce système, déjà connu de l'homme de métier, produit théoriquement des défauts assimilables à des erreurs de parallaxe, mais compte-tenu de la cadence des impulsions (on a parlé ci-dessus de 20 à 50 impulsions par secondes, et rien n'empêche d'augmenter la cadence), et de la vitesse relativement faible de déplacement de l'élément à percer, ces défauts sont absolument négligeables. Le signal acoustique traité pour aboutir à un niveau logique, tel qu'il est obtenu à l'asservissement 23 selon la figure 3, est envoyé de façon connue dans l'armoire 50 qui, le cas échéant, fait varier par une liaison 57 au-moins un paramètre de fonctionnement du laser.

**Revendications**

1. Procédé de perçage d'un élément par laser dans lequel un signal acoustique émis par l'impact du faisceau laser sur l'élément à percer est capté à proximité de cet élément à percer et une caractéristique de ce signal est analysée dans une chaîne de traitement caractérisé en ce qu'il comprend au moins les étapes suivantes :
   filtrage d'amplitude du signal par rapport à un seuil prédéterminé,
   mise en forme logique du signal,
   en parallèle, émission d'un second signal correspondant à chaque impulsion par le laser,
   mise en forme logique du second signal,
   mise en phase des deux signaux,
   d'une part mise en mémoire des signaux correspondant aux impulsions nécessaires au perçage de chaque trou,
   d'autre part, comparaison du signal obtenu à une valeur de consigne,
   puis, mise en forme du résultat de la comparaison; le processus se complétant par l'étape complémentaire :
   affichage et enregistrement du résultat, constituant un moyen de contrôle du perçage et du calibrage corrects de chaque trou.

2. Procédé de perçage par laser selon la revendication 1 caractérisée en ce qu'une première étape préalable dans la chaîne de traitement du signal acoustique émis par l'impact du faisceau laser sur l'élément à percer et capté à proximité de cet élément à percer consiste en un filtrage de fréquences dudit signal.

3. Procédé de perçage par laser selon l'une des revendications 1 et 2 caractérisée en ce que la correction d'au moins un paramètre de fonctionnement du laser est effectuée par intervention manuelle d'un opérateur réagissant à l'affichage d'un résultat reconnu incorrect.

4. Procédé de perçage par laser selon l'une des revendications 1 et 2 caractérisée en ce que le processus est en outre complété par les étapes complémentaires suivantes :
   transmission du résultat du contrôle à un calculateur d'asservissement du laser,
   correction automatique d'au moins un paramètre de fonctionnement du laser.

5. Procédé de perçage par laser selon la revendication 4 caractérisé en ce que la correction automatique est effectuée sur la position du point de focalisation du faisceau laser.

6. Procédé de perçage par laser selon l'une quelconque des revendications précédentes caractérisée en ce que la caractéristique du signal acoustique analysée dans la chaîne de traitement est son intensité ou niveau sonore.

7. Procédé de perçage par laser selon l'une quelconque des revendications 4 à 6 caractérisé en ce que la correction d'au moins un paramètre de fonctionnement du laser est déclenchée seulement pour le trou suivant.

8. Procédé de perçage par laser selon la revendication 4 caractérisé en ce que la correction automatique consiste à provoquer une impulsion supplémentaire pour le perçage et calibrage du trou considéré avant déclenchement du passage au trou suivant, permettant d'obtenir l'asservissement en temps réel du fonctionnement du laser.

9. Dispositif de perçage d'un élément par laser à impulsions pour la mise en œuvre du procédé selon la revendication 1 caractérisé en ce qu'il comporte au moins :
   un capteur acoustique (11) placé à proximité de l'élément à percer et délivrant un signal acoustique,
   un filtre (13) d'amplitude du niveau sonore du signal par rapport à un seuil préalablement déterminé,
   un premier convertisseur (15) du type analogique-numérique opérant la mise en forme logique du signal sous forme « 0 » et « 1 »,
   un second convertisseur (17) du type analogique-numérique traitant un signal reçu du laser et correspondant aux impulsions du faisceau laser,
   un registre (18) effectuant une mise en phase des signaux reçus des premier (15) et second convertisseurs (17),
   une mémoire (19) où sont stockées les informations élaborées dans le registre (18), — un comparateur comparant le signal reçu du registre à une valeur de consigne,
   un comparateur (20) comparant le signal reçu du registre à une valeur de consigne,
   un élément de consigne (21) fournissant au comparateur (20) une valeur de consigne représentant le nombre théorique d'impulsions nécessaires pour percer et calibrer un trou dans l'élément à percer,
   un élément d'affichage et de comptage (22) recevant le signal de sortie du comparateur.

10. Dispositif de perçage par laser selon la revendication 9 caractérisée en ce qu'il comporte, entre le capteur acoustique (11) et le filtre (13) d'amplitude, un filtre (12) de fréquences du signal.

11. Dispositif de perçage par laser selon l'une des revendications 9 et 10 caractérisé en ce qu'il comporte en outre un calculateur d'asservissement (23) recevant le signal de sortie du comparateur et à partir duquel au moins un paramètre de fonctionnement du laser est asservi au résultat obtenu.

**Claims**

1. Process for drilling an element by laser in which an acoustic signal emitted by the impact of the laser beam on the element to be drilled is sensed adjacent to this element to be drilled and a characteristic of the signal is analysed in a processing chain characterized in that it comprises at least the following stages :
   filtering of the signal amplitude in relation to a predetermined threshold,
   converting the signal into logic form,

in parallel, emission of a second signal corresponding to each pulse of the laser,

converting the second signal into a logic form,

bringing the two signals into phase,

in one part placing in memory, signals corresponding to the pulses necessary for drilling of each hole,

in another part, comparison of the resulting signal with a present value,

then, converting the resultant of the comparison, the processes being completed by the complementary stage :

display and storage of the result, comprising a means for controlling cutting and correct calibration of each hole.

2. Process for drilling by laser according to claim 1 characterized in that a first preliminary stage in the processing chain of the acoustic signal emitted by the impact of the laser beam on the element to be drilled and sensed adjacent to this element to be drilled consists of filtering of the frequencies of said signal.

3. Process for drilling by laser according to one of claims 1 and 2 characterized in that the correction of at least one operating parameter of the laser is effected by manual intervention by an operator reacting to the display of a result recognised as incorrect.

4. Process for drilling by laser according to one of claims 1 and 2 characterized in that the process is further completed by the following complementary stages :

transmission of the result of the control to a computer controlling the laser,

automatic correction of at least one operating parameter of the laser.

5. Process for drilling by laser according to claim 4 characterized in that the automatic correction is carried out on the position of the focal point of the laser beam.

6. Process for drilling by laser according to any one of the preceding claims characterized in that the characteristic of the acoustic signal analysed in the processing chain is its intensity or sound level.

7. Process for drilling by laser according to any one of claims 4 to 6 characterized in that the correction of at least one operating parameter of the laser is operative only for the following hole.

8. Process for drilling laser according to claim 4 characterized in that the automatic correction consists of causing a supplementary pulse for the drilling and calibration of the hole considered before allowing passage to the following hole, enabling effecting the control in real time of the operation of the laser.

9. Appliance for drilling an element by a pulse laser for carrying out the process according to claim 1 characterized in that it comprises at least :

an acoustic sensor (11) placed adjacent to the element to be drilled and delivering an acoustic signal,

a filter (13) of amplitude of the sound level of the signal in relation to a previously determined threshold,

a first converter of the analogue-digital type converting the signal into logic form in the form « 0 and 1 »,

a second converter (17) of the analogue-digital type processing a signal received from the laser and corresponding to the pulses of the laser beam,

a register (18) effecting phase matching of the signals received from the first (15) and second convertors (17),

a memory (19) where information generated in the register (18) is stored, — a comparator comparing the signal received from the register with a present value,

a comparator (20) comparing the signal received from the register with a present value,

an input element (21) applying to the comparator (20) a present value representating the theoretical number of pulses necessary for cutting and calibrating a hole in an element to be drilled.

a display and counting element (22) receiving the output signal of the comparator.

10. Appliance for drilling by laser according to claim 9 characterized in this that it comprises, between the acoustic sensor (11) and the filter (13) of amplitude, a filter (12) of the frequencies of the signal.

11. Appliance for drilling by laser according to one of claims 9 and 10 characterized in this that it comprises further a control computer (23) receiving the output signal of the comparator from which at least one operating parameter of the laser is controlled on the result produced.

## Patentansprüche

1. Verfahren zum Bohren eines Elements mit Hilfe eines Lasers, bei dem ein akustisches Signal, das beim Auftreffen des Laserstrahls auf dem zu bohrenden Element emittiert wird, in der Nähe des zu bohrenden Elements aufgenommen und ein charakteristisches Merkmal dieses Signals in einer Verarbeitungsfolge analysiert wird, dadurch gekennzeichnet, daß wenigstens folgende Verfahrensschritte vorgesehen sind :

Amplitudenfilterung des Signals mit einem vorgegebenen Schwellenwert als Bezugsgröße,

Umformung des Signals in ein logisches Signal,

parallel dazu Emittierung eines den einzelnen Impulsen des Lasers entsprechenden zweiten Signals,

Umformung des zweiten Signals in ein logisches Signal,

Phasensynchronisierung der beiden Signale,

Speicherung der für das Herstellen jedes Lochs erforderlichen Impulse einerseits,

Vergleich des erhaltenden Signals mit einem Einstellwert andererseits,

Umformung des Vergleichsergebnisses,

Vervollständigung des Prozesses durch folgenden zusätzlichen Verfahrensschritt :

Anzeige und Registrierung des Resultats, das ein Mittel für die Prüfung auf korrekte Lochung und korrekte Kalibrierung jedes Lochs darstellt.

2. Verfahren zum Laserbohren nach Anspruch 1, dadurch gekennzeichnet, daß das bei dem Auftreffen des Laserstrahls auf dem zu bohrenden Element ausgesandte und in der Nähe des zu bohrenden Elements aufgenommene akustische Signal in einem vorbereitenden Verfahrensschritt in der genannten Verarbeitungsfolge einer Frequenzfilterung unterzogen wird.

3. Verfahren zum Laserbohren nach einem der Ansprüche 1 und 2, dadurch gekennzeichnet, daß die Korrektur wenigstens eines der Betriebsparameter des Lasers in Reaktion auf die Anzeige eines als fehlerhaft erkannten Ergebnisses durch manuellen Eingriff einer Bedienungsperson erfolgt.

4. Verfahren zum Laserbohren nach einem der Ansprüche 1 und 2, dadurch gekennzeichnet, daß der Prozeß außerdem durch folgende zusätzliche Verfahrensschritte vervollständigt wird :

Übertragung des Prüfungsergebnisses zu einem Rechner zur Steuerung des Lasers und

automatisches Korrigieren wenigstens eines Betriebs-Parameters des Lasers.

5. Verfahren zum Laserbohren nach Anspruch 4, dadurch gekennzeichnet, die automatische Korrektur durch Beeinflussung der Position der Fokussierungspunktes des Laserstrahls erfolgt.

6. Verfahren zum Laserbohren nach einem der vorgehenden Ansprüche, dadurch gekennzeichnet, daß das in der Verarbeitungsfolge analysierte charakteristische Merkmal des akustischen Signals seine Schallintensität (Schallpegel) ist.

7. Verfahren zum Laserbohren nach einem der Ansprüche 4 bis 6, dadurch gekennzeichnet, daß die Korrektur wenigstens eines Betriebsparameters des Lasers erst für das nächstfolgende Loch ausgelöst wird.

8. Verfahren zum Laserbohren nach Anspruch 4, dadurch gekennzeichnet, daß die automatische Korrektur darin besteht, daß für das Bohren und die Kalibrierung des betreffenden Loches ein zusätzlicher Impuls erzeugt wird, bevor der Übergang zu dem nächstfolgenden Loch ausgelöst wird, wodurch eine Echtzeit-Regelung des Laserbetrieb erreicht werden kann.

9. Vorrichtung zum Bohren eines Elements mit Hilfe eines Impulslasers zur Durchführung des Verfahrens nach Anspruch 1, dadurch gekennzeichnet, daß wenigstens folgende Teile vorgesehen sind :

ein akustischer Aufnehmer (11), der in der Nähe des zu bohrenden Elements angeordnet ist und ein akustisches Signal liefert,

ein Amplitudenfilter (13) für den Schallpegel des Signals auf der Grundlage eines zuvor festgelegten Schwellenwerts,

ein erster Analog-Digitalwandler (15) für die Umwandlung des Signals in ein binäres logisches Signal,

ein zweiter Analog-Digitalwandler (17) zur Umformung eines von dem Laser empfangenen und den Impulsen des Laserstrahls entsprechenden Signals,

ein Register (18) zur Phasensynchronisierung der von dem ersten (15) und dem zweiten (17) Analog-Digitalwandler abgegebenen Signale,

ein Speicher (19) zur Speicherung der in dem Register (17) verarbeiteten Informationen,

ein Komparator (20) für den Vergleich des von dem Register abgegebenen Signals mit einem Einstellwert,

ein Einstellelement (21) zur Lieferung eines Einstellwerts an den Komparator, der der theoretischen Anzahl der für das Herstellen und Kalibrieren eines Loches in dem zu bohrenden Element erforderlichen Impulse entpricht,

sowie ein Anzeige- und Zählelement (22), das das Ausgangssignal des Komparators aufnimmt.

10. Vorrichtung zum Laserbohren nach Anspruch 9, dadurch gekennzeichnet, daß zwischen dem akustischen Aufnehmer (11) und dem Amplitudenfilter (13) ein Filter (12) zur Frequenzfilterung des Signals angeordnet ist.

11. Vorrichtung zum Laserbohren nach einem der Ansprüche 9 und 10, dadurch gekennzeichnet, daß ein Steuerrechner (23) vorgesehen ist, dem das Ausgangssignal des Komparators zugeführt wird, und daß hiervon ausgehend wenigstens ein Betriebsparameter des Lasers auf das gewonnene Resultat geregelt wird.

Fig.1

Fig.2

0 129 462

Fig.3

Fig.4